(19) Europäisches Patentamt
European Patent Office
Office européen des brevets

(11) EP 2 569 763 B1

(12) EUROPÄISCHE PATENTSCHRIFT

(45) Veröffentlichungstag und Bekanntmachung des Hinweises auf die Patenterteilung:
25.02.2015 Patentblatt 2015/09

(21) Anmeldenummer: 11761300.0

(22) Anmeldetag: 24.08.2011

(51) Int Cl.:
*G08B 31/00* (2006.01)

(86) Internationale Anmeldenummer:
PCT/EP2011/064571

(87) Internationale Veröffentlichungsnummer:
WO 2012/038179 (29.03.2012 Gazette 2012/13)

(54) **VERFAHREN ZUR RECHNERGESTÜTZTEN ÜBERWACHUNG DER FUNKTIONSLEISTUNG EINES TECHNISCHEN SYSTEMS**

METHOD FOR THE COMPUTER-ASSISTED MONITORING OF THE FUNCTIONAL PERFORMANCE OF A TECHNICAL SYSTEM

PROCÉDÉ DE SURVEILLANCE ASSISTÉE PAR ORDINATEUR DE LA PUISSANCE FONCTIONNELLE D'UN SYSTÈME TECHNIQUE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 21.09.2010 DE 102010041149

(43) Veröffentlichungstag der Anmeldung:
20.03.2013 Patentblatt 2013/12

(73) Patentinhaber: Siemens Aktiengesellschaft
80333 München (DE)

(72) Erfinder: MONTRONE, Francesco
85521 Riemerling (DE)

(56) Entgegenhaltungen:
US-A1- 2003 210 139     US-A1- 2008 126 031

EP 2 569 763 B1

**Beschreibung**

Die Erfindung betrifft ein Verfahren zur rechnergestützten Überwachung der Funktionsleistung eines technischen Systems, das eine Vielzahl an technischen Komponenten umfasst.

Technische Systeme weisen üblicherweise eine Vielzahl an gleichen und unterschiedlichen Komponenten auf, deren bestimmungsgemäßes Zusammenwirken für die Funktion des technischen Systems notwendig ist. Dies trifft beispielsweise auf Brandmeldeanlagen zu, wie auch auf viele weitere technische Systeme in anderen Anwendungsgebieten.

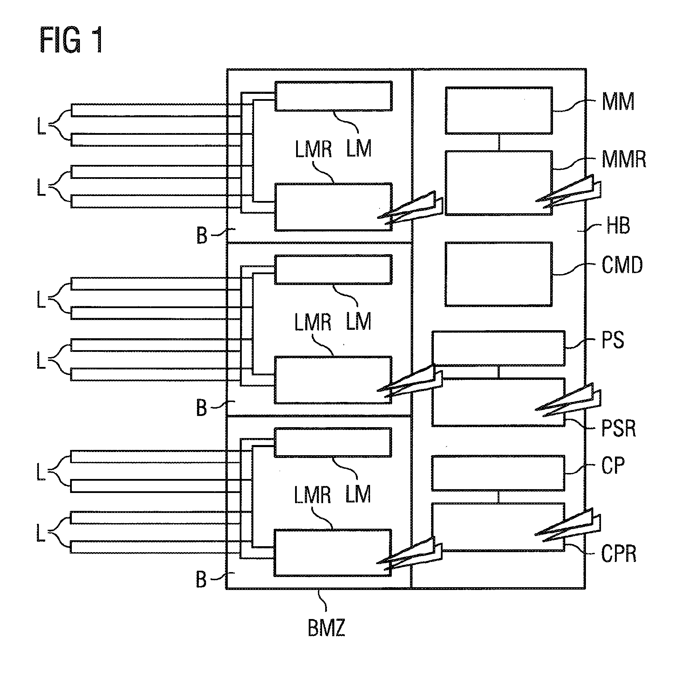

Fig. 1 zeigt exemplarisch, stellvertretend für ein komplexes technisches System, eine Brandmeldeanlage BMA. Eine Brandmeldeanlage umfasst typischerweise eine Anzahl an Signalleitungen L (sog. Loops), wobei jede der Signalleitungen L mit einer vorgegebenen, maximalen Anzahl an Brandmeldern (nicht dargestellt) verbunden sein kann. Eine Unteranzahl an Signalleitungen ist wiederum mit einer Recheneinheit LM (Line Module) verbunden, welche die von einem der Brandmelder ausgesendeten Signale entgegennimmt und verarbeitet. Die Recheneinheit kann beispielsweise in einer Brandmeldezentrale BMZ vorgesehen sein. Aus Verfügbarkeitsgründen ist auf der Einheit B (Board), auf der die Recheneinheit LM angeordnet ist, eine redundante Recheneinheit LMR vorgesehen. Die redundante Recheneinheit LMR ist mit denselben Signalleitungen L verbunden, die mit der Recheneinheit LM verbunden sind. Eine Brandmeldezentrale BMZ kann eine Mehrzahl an Einheiten B mit jeweiligen Recheneinheiten LM und redundanten Recheneinheiten LMR umfassen. Im Ausführungsbeispiel sind drei Einheiten B dargestellt. Die Einheiten B, welche beispielsweise in Gestalt von Platinen oder Boards ausgebildet sind, sind ihrerseits mit einer Haupteinheit HB (z.B. einer Hauptplatine) verbunden. Die Haupteinheit HB umfasst eine Hauptrecheneinheit HM (sog. Master Module), die ebenfalls in redundanter Bauform (Bezugszeichen HMR) vorliegt, eine Steuereinheit CMD (Control Module Driver I/U), eine Energieversorgung PS (Power Supply) und eine redundante Energieversorgung PSR (Power Supply Redundant) sowie eine Steuer- und Überwachungseinheit CP (Control Panel), die ebenfalls als redundante Steuer- und Überwachungseinheit CPR (Control Panel Redundant) vorhanden ist.

Für die bestimmungsgemäße Funktion der Brandmeldeanlage ist es unter anderem erforderlich, dass eine Mindestanzahl an Brandmeldern funktionsfähig ist und ein durch einen Brandmelder detektiertes Ereignis über die Signalleitung L zur weiteren Auswertung an die Einheit LM übertragen wird, welche wiederum ein entsprechendes Signal an die Hauptrecheneinheit MM überträgt. Die Erkennungsleistung eines Brandmelders kann beispielsweise abhängig vom Typ des Brandmelders sein. Beispielsweise kann ein Brandmelder als Rauchmelder, als Hitzemelder oder als optischer Detektor ausgebildet sein. Die Erkennungsleistung hängt weiterhin von der jeweiligen Hard- und/oder Software des Brandmelders ab. Beispielsweise verfügen technisch neuere Brandmelder über eine erhöhte Funktionsleistung aufgrund verbesserter Signalverarbeitung mit neuen Software-Algorithmen und neuer Hardware mit empfindlicheren Sensoren und damit einer höheren Brand-Erkennungsrate und geringeren Täuschungsalarmrate.

In der in Fig. 1 beispielhaft skizzierten Brandmeldeanlage können somit nicht nur Brandmelder unterschiedlichen technischen Typs, sondern auch unterschiedliche Funktionsleistungen baugleicher Brandmelder oder unterschiedlicher Brandmelder vorgesehen sein. Eine unterschiedliche Funktionsleistung baugleicher Brandmelder kann beispielsweise durch den Austausch defekter Brandmelder oder regelmäßige Instandhaltungsarbeiten die Folge sein, wodurch ältere und neuere Brandmeldertypen kombiniert zum Einsatz kommen. Die Funktionsleistungen jeweiliger technischer Komponenten der Brandmeldeanlage sind weiterhin von der Betriebsdauer des Systems abhängig, da Umwelteinflüsse, Umgebungs- und Nutzungsänderungen sowie Bauteile zeitbedingten Schwankungen unterworfen sein können.

Eine Brandmeldeanlage kann ohne Weiteres mehrere Jahrzehnte im Einsatz sein. Ein Austausch bestimmter technischer Komponenten erfolgt beispielsweise bei einer wachsenden Häufung von Stör- und Ausfällen der jeweiligen Komponenten. Sofern die Verfügbarkeit von Ersatzteilen für verbaute Komponenten nicht mehr gewährleistet ist oder das Ende der Produkt-Lebensdauer von Komponenten erreicht ist, besteht sogar der Zwang, jeweilige Komponenten durch solche neuerer Bauart zu ersetzen. Ein solcher Ersatz kann auch notwendig werden, wenn höhere Anforderungen an die Funktionalität oder sich ändernde gesetzliche Vorgaben vorliegen.

Im Laufe der Zeit kann die oben beschriebene Brandmeldeanlage daher hinsichtlich der von ihr bereitgestellten Funktionsleistung nicht mehr bestimmt werden. Unter Umständen kann daher auch nicht mehr bestimmt werden, ob vorgegebene Anforderungen gesetzlicher oder anderer Natur eingehalten werden können.

Es ist daher Aufgabe der vorliegenden Erfindung, ein Verfahren anzugeben, mit dem eine rechnergestützte Überwachung der Funktionsleistung eines technischen Systems, das eine Vielzahl an technischen Komponenten umfasst, gewährleistet ist.

Diese Aufgabe wird gelöst durch ein Verfahren mit den Merkmalen des Patentanspruches 1 sowie ein Computerprogrammprodukt mit den Merkmalen des Patentanspruches 10. Vorteilhafte Ausgestaltungen ergeben sich aus den abhängigen Patentansprüchen.

Bei dem erfindungsgemäßen Verfahren zur rechnergestützten Überwachung der Funktionsleistung eines technischen Systems, das eine Vielzahl an technischen Komponenten umfasst, wird für jede technische Komponente des technischen Systems zunächst eine tatsächliche Funktionsleistung ermittelt, wobei sich die tatsächliche Funktionsleistung aus der gegebenen Hard- und/oder Software der technischen Komponente ergibt. Die tatsächliche Funktionsleistung ergibt sich beispielsweise aus der Geschwindigkeit der Signalverarbeitung, der Erkennungsrate von Sensor-Signalen usw. Die tatsächliche Funktionsleistung kann beispielsweise in Gestalt einer Kennzahl angegeben werden, wobei diese dann einen Vergleich zwischen technischen Komponenten mit unterschiedlicher Funktionsleistung zum Ausdruck bringen sollte.

Weiter wird jede technische Komponente einem Komponententyp zugeordnet, wobei Komponenten desselben oder vergleichbaren Funktionsumfangs einem Komponententyp zugewiesen werden. Komponententypen stellen im eingangs beschriebenen Beispiel einer Brandmeldeanlage beispielsweise "Brandmelder", "Signalleitungen", "Recheneinheiten", "Zentralrecheneinheiten", "Steuereinheiten", "Steuer- und Überwachungseinheiten" sowie "Stromversorgungen" dar. Die Gattung der Komponententypen kann hinsichtlich der Granularität beliebig fein gewählt werden. Ein Komponententyp kann z.B. unterschiedliche Komponentenuntertypen vereinigen. Beispielsweise stellen Brandmelder, die nach dem Prinzip der optischen Erkennung, der Rauchdetektion sowie der Hitzedetektion arbeiten, unterschiedliche Komponentenuntertypen dar, welche in einem Komponententyp "Brandmelder" zusammengefasst sind. Auch eine diesbezügliche Unterteilung kann in beliebiger Granularität erfolgen.

In einem weiteren Schritt wird für jeden Komponententyp eine weitere Funktionsleistung ermittelt, welche den Funktionsumfang der Hard- und/oder Software einer Komponente beschreibt, der von allen verfügbaren Komponenten eines Komponententyps die höchste Funktionsleistung aufweist. Die weitere Funktionsleistung kann somit als "Stand der Technik"-Funktionsleistung betrachtet werden. Die weitere Funktionsleistung wird von solchen Komponenten erbracht, die die höchstmögliche, aktuell verfügbare Leistungsfähigkeit aufweisen.

In einem weiteren Schritt wird aus der tatsächlichen Funktionsleistung einer jeweiligen technischen Komponente und der weiteren Funktionsleistung eine Komponenten-bezogene, normierte Funktionsleistung ermittelt. Mittels der Komponenten-bezogenen, normierten Funktionsleistung ist es möglich, Komponenten desselben Komponententyps hinsichtlich deren Leistungsfähigkeit zu vergleichen.

Anschließend wird aus den Komponenten-bezogenen, normierten Funktionsleistungen aller Komponenten desselben Komponententyps eine Komponententyp-bezogene normierte Funktionsleistung ermittelt. Diese ermöglicht eine quantitative Bewertung der Funktionsleistung sämtlicher Komponenten des gleichen Komponententyps.

Im letzten Schritt wird die Komponententyp-bezogene, normierte Funktionsleistung zumindest eines Komponententyps mit einem Schwellwert verglichen, wobei bei einer Unterschreitung des Schwellwerts ein Alarmsignal ausgegeben wird. Das Alarmsignal signalisiert eine nicht ausreichende Funktionsleistung und den notwendigen Austausch zumindest mancher der Komponenten des zumindest einen Komponententyps.

Das erfindungsgemäße Verfahren kann dazu verwendet werden, unterschiedliche Auswirkungen von unterschiedlichen Instandhaltungs- und Modernisierungsmaßnahmen quantitativ zu bewerten. Insbesondere kann eine normierte Funktionsleistung des technischen Systems über die Zeit dargestellt werden. Diese kann für historische Wertungen wie auch für die Planung und Vornahme der Migration einzelner oder mehrerer Komponenten des technischen Systems eingesetzt werden. Insbesondere ermöglicht es das Verfahren, Strategien miteinander zu vergleichen und Optimierungen hinsichtlich der Maximierung einer minimalen Funktionsleistung, die zu irgendeinem Zeitpunkt angenommen wird, vorzunehmen. Eine weitere Optimierung kann in der Bestimmung einer Pareto-Front für die Funktionsleistung, und optional der Kosten von Teilerneuerungen der Anlage, bestehen. Ein weiterer Aspekt besteht in der Optimierung der Kosten unter der Vorgabe, dass die Anlage zu keinem Zeitpunkt eine zu niedrige Funktionsleistung aufweist.

Gemäß einer zweckmäßigen Ausgestaltung wird zur Ermittlung der Komponententyp-bezogenen, normierten Funktionsleistung eine Gewichtung nach baugleichen Komponenten relativ zur Gesamtanzahl aller Komponenten desselben Komponententyps vorgenommen. Hierdurch ist es auf einfache Weise möglich, die Anzahl jeweiliger Komponentenuntertypen zu berücksichtigen.

Gemäß einer weiteren zweckmäßigen Ausgestaltung wird die weitere Funktionsleistung eines jeweiligen Komponententyps in vorgegebenen Zeitintervallen neu bestimmt, um basierend darauf den Schwellwertvergleich erneut durchzuführen. Das Zeitintervall kann regelmäßiger Natur sein. Das Zeitintervall kann jedoch auch abhängig von den Abständen zwischen jeweils zwei Komponentengenerationen gewählt sein.

In einer weiteren zweckmäßigen Ausgestaltung wird aus den Komponententyp-bezogenen Funktionsleistungen eine System-bezogene Funktionsleistung ermittelt, welche eine quantitative Bewertung des gesamten technischen Systems ermöglicht. Hierfür kann mit den normierten Komponententyp-bezogenen Funktionsleistungen ein gewichteter arithmetischer, geometrischer oder harmonischer Mittelwert oder auch das Produkt gebildet werden, je nachdem, wie sich die Funktionsleistung des technischen Systems aus den Funktionsleistungen der Komponententypen zusammensetzt. Beim Produkt ist es für die Systemfunktionsleistung wichtig, dass alle Komponententypen ihre Funktionsleistung erbringen, bei einer Mittelwertbildung führt der Funktionsbeitrag eines jeden Komponententyps bereits zu einer Erhöhung der Systemfunktionsleistung unabhängig von Funktionsleistungen anderer Komponententypen.

In einer weiteren zweckmäßigen Ausgestaltung sind die tatsächliche Funktionsleistung und die weitere Funktionsleistung Kennzahlen. Die tatsächliche Funktionsleistung kann sich durch Degradation, Verschmutzung, Verschiebung von Bauteilewerten verschlechtern. Die Kennzahl der weiteren Funktionsleistung einer Komponente ist abhängig von deren technischer Entwicklung und dem Leistungsumfang. Mit anderen Worten bedeutet dies, dass jede neuere Generation einer Komponente einen erhöhten Leistungsumfang und daher eine höhere Funktionsleistung aufweist, die sich z.B. in einer entsprechend höheren Kennzahl widerspiegelt. Die Kennzahlen von tatsächlicher und weiterer Funktionsleistung ermöglichen bei unmittelbarer Gegenüberstellung einen Vergleich von älterer und Stand der Technik-Komponente. Da zur Ermittlung der normierten Funktionsleistung die tatsächliche Funktionsleistung und die weitere Funktionsleistung zueinander ins Verhältnis gesetzt werden, sinkt die normierte Funktionsleistung einer älteren Komponente mit der Zeit immer weiter ab, insbesondere auch aufgrund der immer höher werdenden Kennzahl der weiteren Funktionsleistung.

Zweckmäßigerweise wird die weitere Funktionsleistung auf eine Zeit bezogen, zu der die weitere Funktionsleistung einer Komponente des zugeordneten Komponententyps erstmalig zur Verfügung steht.

Gemäß einer weiteren zweckmäßigen Ausgestaltung wird die tatsächliche Funktionsleistung durch einen Vergleich mit zumindest einer weiteren, auf eine jeweilige Zeit bezogene Funktionsleistung des zugeordneten Komponententyps ermittelt. Dies bedeutet mit anderen Worten, dass bei der Ermittlung der tatsächlichen Funktionsleistung zeitlich älterer Komponenten zunächst die Funktionsleistung der aktuellen Komponente(n) als Referenz ermittelt wird. Ausgehend von der Funktionsleistung der aktuellen Komponente(n) wird dann die Funktionsleistung der Komponente(n) der letzten Generation ermittelt. Ausgehend von dieser als neuer Referenz wird die Funktionsleistung der Generation davor ermittelt, usw. Hieraus ergibt sich, dass mit jeder neuen Generation eine Verschlechterung der normierten Funktionsleistung der älteren Komponente(n) erfolgen wird. Dabei wird schließlich irgendwann der eingestellte, vorgegebene Schwellwert erreicht, der notwendig ist, um die bestimmungsgemäße Funktionalität des technischen Systems aufrecht zu erhalten. Spätestens zu diesem Zeitpunkt ist es notwendig, einzelne Komponenten eines Komponententyps, oder sämtliche Komponenten eines Komponententyps auszutauschen, um die gesamte normierte Funktionsleistung oberhalb des vorgegebenen Schwellwerts zu halten.

In einer weiteren zweckmäßigen Ausgestaltung ist vorgesehen, dass für jeden Komponententyp in einer Datenbank Informationen über den Beginn und das Ende seiner Marktverfügbarkeit, seiner Funktionsleistung, seiner Funktionsleistung gegenüber einer zeitlich vorherigen Generation, seiner Kompatibilität mit anderen Komponenten desselben oder eines anderen Komponententyps ausgewertet bzw. in dieser hinterlegt werden. Stehen die genannten Informationen für die in einem technischen System verwendeten Komponenten zur Verfügung, so ist es auf einfache Weise möglich, die normierte Funktionsleistung zumindest eines Komponententyps zu ermitteln und den beschriebenen Schwellwertvergleich zur Bewertung der Anlage vorzunehmen.

Das erfindungsgemäße Verfahren kann beispielsweise zur Bestimmung der Funktionsleistung in einer Brandmeldeanlage verwendet werden. Das Verfahren ermöglicht jedoch auch die quantitative Bestimmung der Funktionsleistung beliebiger anderer technischer Systeme, die auf einer Vielzahl unterschiedlicher Komponenten basieren.

Die Erfindung schafft weiter ein Computerprogrammprodukt, das direkt in den internen Speicher eines digitalen Computers geladen werden kann und das Softwarecodeabschnitte umfasst, mit denen die Schritte des beschriebenen Verfahrens ausgeführt werden, wenn das Produkt auf einem Computer läuft.

Die Erfindung wird nachfolgend näher anhand eines Ausführungsbeispiels erläutert. Es zeigen:

Fig. 1    eine bereits beschriebene, beispielhafte schematische Darstellung eines komplexen technischen Systems mit einer Vielzahl an unterschiedlichen Komponenten,

Fig. 2    ein Diagramm, das die normierte Funktionsleistung eines Komponententyps über den zeitlichen Verlauf darstellt, wobei keine Erneuerung bzw. kein Austausch von technischen Komponenten des technischen Systems über die Zeit erfolgt,

Fig. 3    ein Diagramm, dass die normierte Funktionsleistung über den zeitlichen Verlauf bei einer Teil-Erneuerung von Komponenten des technischen Systems illustriert, und

Fig. 4    eine beispielhafte Tabelle mit Informationen zu jeweiligen in einem technischen System verwendeten Komponenten.

Die nachfolgende Beschreibung basiert auf der in Verbindung mit Fig. 1 bereits beschriebenen Brandmeldeanlage BMA, die lediglich stellvertretend für ein beliebiges technisches System steht.

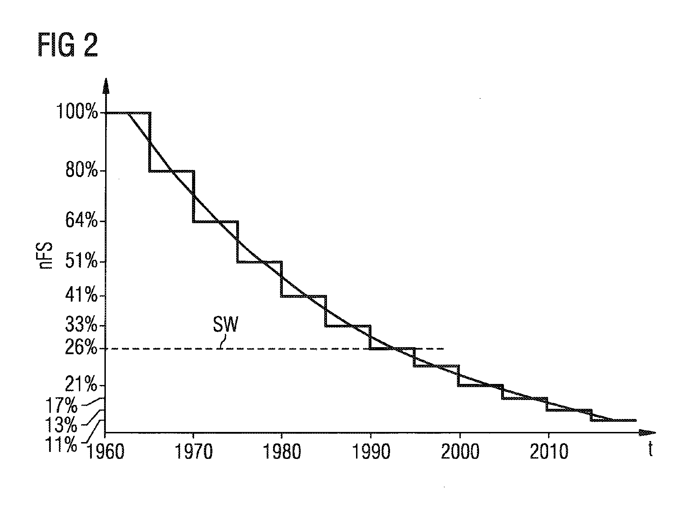

Fig. 2 zeigt die für eine Brandmeldeanlage BMA gültige normierte Funktionsleistung nFS über den zeitlichen Verlauf T. Die normierte Funktionsleistung nFS bezieht sich auf sämtliche Komponenten desselben Komponententyps der Brandmeldeanlage. Beispielsweise bezieht sich die normierte Funktionsleistung auf sämtliche in der Brandmeldeanlage BMA verbauten Brandmelder. Der qualitative Kurvenverlauf wäre jedoch auch für andere Komponententypen wie z.B. Recheneinheiten, Hauptrecheneinheiten usw. ähnlich. Hieraus ergibt sich, dass auch bei einer Darstellung der normierten Funktionsleistung für das gesamte technische System der Brandmeldeanlage BMA ein qualitativ ähnlicher Kurvenverlauf über der Zeit resultieren würde. Die in der Beschreibung gewählte Beschränkung auf einen einzigen Komponententyp dient lediglich der einfacheren Verständlichkeit.

Die Ermittlung der normierten Funktionsleistung für sämtliche Brandmelder der Brandmeldeanlage BMA, die an sämtlichen Signalleitungen L angeschlossen sind, basiert auf der Ermittlung einer tatsächlichen Funktionsleistung für jede technische Komponente, d.h. jeden Brandmelder der Brandmeldeanlage. Zur Vereinfachung ist es ausreichend, wenn die tatsächliche Funktionsleistung für jeden unterschiedlichen Komponentenuntertyp ermittelt wird. Untertypen von Brandmeldern sind beispielsweise solche, die auf unterschiedlichen technischen Detektionsprinzipien basieren. Bei der genannten Vereinfachung wird dabei davon ausgegangen, dass die tatsächliche Funktionsleistung eines jeden Hitzedetektors gleicher Bauart identisch ist. Wurden somit die tatsächlichen Funktionsleistungen von Hitzedetektoren, optischen Detektoren und Rauchdetektoren (als Komponentenuntertypen) ermittelt, so liegen sämtliche, für die weiteren Berechnungen notwendigen Informationen vor.

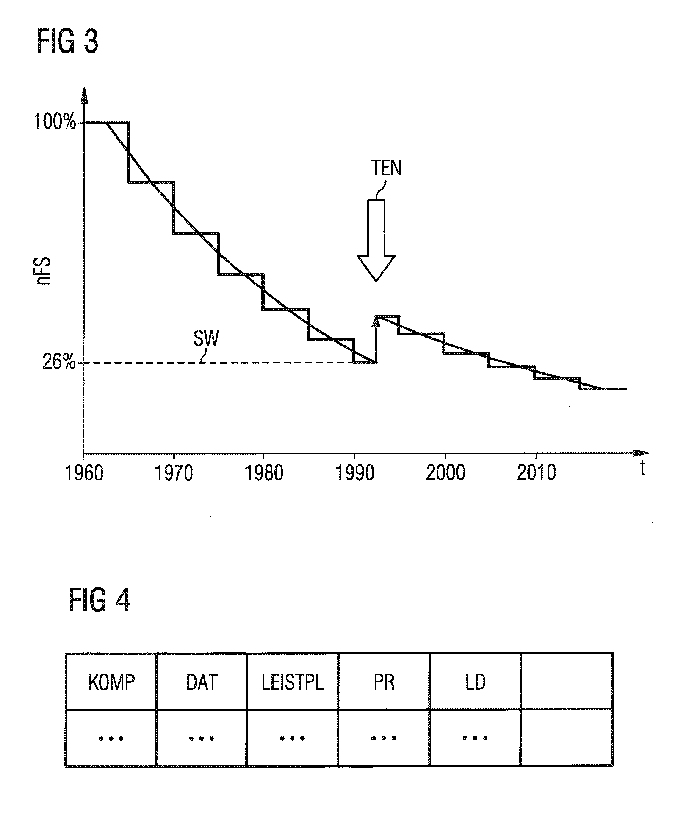

Es ist dabei zweckmäßig, wenn für einen jeweiligen Komponentenuntertyp die ermittelten Informationen in einer Tabelle einer Datenbank für zukünftige Berechnungen der Funktionsleistung gespeichert werden. Eine beispielhafte Tabelle einer solchen Datenbank ist in Fig. 4 dargestellt, welche beispielsweise die Spalten KOMP für die betrachtete Komponente, DAT für das Datum des Markteintritts, LEISTPL für das Leistungsplus gegenüber einer vorherigen Generation an funktionsähnlichen Komponenten, dem Preis PR und eine Lebensdauer LD umfasst. Die Lebensdauer LD bezeichnet dabei den Zeitraum der Verfügbarkeit zwischen Beginn der Marktverfügbarkeit und Ende der Marktverfügbarkeit. Gegebenenfalls können weitere Spalten vorgesehen sein, die den Zeitraum einer möglichen Ersatzteilversorgung angeben.

Die tatsächliche Funktionsleistung F1 ergibt sich aus den technischen Fähigkeiten und Möglichkeiten der jeweiligen Komponente. Insbesondere geben Hard- und/oder Software der technischen Komponente die tatsächliche Funktionsleistung hinsichtlich Geschwindigkeit der Signalverarbeitung und Erkennungsrate von Sensorsignalen usw. vor.

Für jeden Komponententyp wird eine weitere Funktionsleistung F2 ermittelt, wobei die weitere Funktionsleistung den Funktionsumfang einer Stand der Technik-Komponente desselben Komponententyps bzw. Untertyps angibt. Eine solche Stand der Technik-Komponente weist damit die höchste Funktionsleistung sämtlicher Komponenten eines bestimmten Komponententyps auf.

Aus der tatsächlichen Funktionsleistung F1 einer jeweiligen technischen Komponente (bzw. eines Komponentenuntertyps) und der weiteren Funktionsleistung F2 einer Stand der Technik-Komponente (bzw. eines Stand der Technik-Komponentenuntertyps) wird eine Komponenten-bezogene normierte Funktionsleistung nF ermittelt. Dies erfolgt, wie erläutert, mindestens für alle Komponentenuntertypen eines jeweiligen Komponententyps. Im konkreten Ausführungsbeispiel werden jeweils die normierten Funktionsleistungen nF für optische Detektoren, Rauchdetektoren und Hitzedetektoren ermittelt.

Um eine auf den Komponententyp Brandmelder bezogene, normierte Funktionsleistung nFS zu ermitteln, wird eine Gewichtung nach baugleichen Komponenten relativ zur Gesamtanzahl aller Komponenten desselben Komponententyps vorgenommen. Dies erfolgt nach folgender Formel:

$$nFS(alle\ Melder) = \sum_{i=Meldertyp\,1}^{Meldertyp\,N} w_i \cdot nF\left(Meldertyp_i\right), \texttt{wobei}$$

$$w_i = \frac{Anzahl\ der\ Melder\ des\ Typs\ i,\ welche\ im\ System\ verbaut\ sind}{Gesamtanzahl\ Melder}$$

ist.

Meldertyp$_i$ entspricht den oben genannten Komponentenuntertypen. Das Ergebnis ist eine quantitative Bewertung in Form der normierten Funktionsleistung nFS bezüglich aller Brandmelder einer Brandmeldeanlage.

Diese Vorgehensweise wird analog für sämtliche Komponententypen wiederholt.

Die Ermittlung der Komponenten-bezogenen, normierten Funktionsleistung nF erfolgt vorzugsweise ausgehend von der tatsächlichen Funktionsleistung F1 einer gegenwärtigen Komponente (die dann der weiteren Funktionsleistung F2 entspricht), um in Relation hierzu die tatsächliche Funktionsleistung F1 älterer Komponenten ermitteln zu können. Die für eine Komponente eines gegebenen Erscheinungsdatums ermittelte tatsächliche Funktionsleistung F1 bleibt dabei über die gesamte Einsatzdauer konstant, unabhängig davon, welche Verbesserungen neue Generationen erfahren haben. Verbesserungen machen sich lediglich in der weiteren Funktionsleistung, auf die die tatsächliche Funktionsleistung F1 bezogen wird, bemerkbar. Hieraus ergibt sich dann der in Fig. 2 gezeigte, in etwa exponentiell abfallende Verlauf der normierten Funktionsleistung.

Ein im Jahre 1960 den Stand der Technik repräsentierender Brandmelder wies eine normierte Funktionsleistung von 100% auf, bis zum Erscheinen der nächsten Generation. Der Einfachheit halber wird in dem Diagramm der Fig. 2 davon ausgegangen, dass alle fünf Jahre eine neue Produktgeneration erscheint, welche eine um 20% höhere Funktionsleistung aufweist. Dies hat zur Folge, dass die normierte Funktionsleistung des im Jahre 1960 installierten Brandmelders im Jahre 1965 nur noch 80% beträgt. Mit Erscheinen der nächsten Generation im Jahre 1970 nimmt die normierte Funktionsleistung sämtlicher Brandmelder wiederum um 20% ab und beträgt lediglich 64%. Im Jahre 2010 beträgt die normierte Funktionsleistung nFS mit Erscheinen der zehnten Nachfolgegeneration lediglich noch ca. 11%.

Bedingt durch die Betriebsdauer, den auf die Brandmelder einwirkenden Umweltstress, Änderungen in der Umgebung und Nutzung sowie der Verschiebung von Bauteilewerten kann auch bei ständig vorgenommener Reparatur der 1960 installierten Brandmelder die Funktionsfähigkeit gemessen an gesetzlichen Vorgaben sowie anderen Randbedingungen nicht mehr sichergestellt werden. Bereits im Jahre 1990 wird ein gewählter Schwellwert, der beispielhaft bei 26% der normierten Funktionsleistung nFS liegt, unterschritten, so dass Handlungsbedarf bezüglich der Erneuerung mindestens einer Anzahl an Brandmeldern besteht. Das Unterschreiten des Schwellwerts SW durch die normierte Funktionsleitung nFS löst beispielsweise ein Alarmsignal aus. Der Schwellwert SW kann einer gesetzlichen Vorgabe folgen oder auch technisch bedingt sein.

Findet eine Teil-Erneuerung der Brandmelder statt, indem ein Teil der Brandmelder durch solche mit höherer Funktionsleistung ausgetauscht wird, so erhöht sich auch die normierte Funktionsleistung nFS, so dass der Schwellwert SW wiederum überschritten wird. Dies ist zur Illustration in Fig. 3 dargestellt, wobei TEN den Zeitpunkt der Teilerneuerung darstellt. Bei einem Austausch sämtlicher Brandmelder durch Brandmelder mit der höchsten Funktionsleistung gemäß dem Stand der Technik könnte wiederum eine normierte Funktionsleistung nFS von 100% erreicht werden.

Die normierte Funktionsleistung eines Komponententyps oder in Erweiterung des gesamten technischen Systems erlaubt die Sicherstellung der Funktionssicherheit des technischen Systems über die Zeit. Dabei ist sicherzustellen, dass die normierte Funktionsleistung eine bestimmte Schwelle nicht unterschreitet. Die quantitative Ermittlung der normierten Funktionsleistung ermöglicht eine historische Bewertung sowie eine automatisierte Information, wann Handlungsbedarf bezüglich der Erneuerung von Komponenten besteht. Dabei erlaubt es die Ermittlung der normierten Funktionsleistung der Komponententypen bzw. des gesamten technischen Systems Kosten hinsichtlich des Austauschs einzelner Komponenten zu minimieren, unter der Vorgabe, dass das technische System zu keinem Zeitpunkt eine zu niedrige Funktionsleistung aufweist. Darüber hinaus kann die minimale Funktionsleistung maximiert werden, welche zu irgendeinem Zeitpunkt angenommen wird. Beispielsweise kann auch die Pareto-Front für die normierte Funktionsleistung und die Kosten von Teilerneuerungen des technischen Systems ermittelt werden.

**Patentansprüche**

1. Verfahren zur rechnergestützten Überwachung der Funktionsleistung eines technischen Systems (BMA), das eine Vielzahl an technischen Komponenten (KOMP) umfasst, bei dem

   - für jede technische Komponente (KOMP) des technischen Systems eine tatsächliche Funktionsleistung (F1) ermittelt wird, wobei sich die tatsächliche Funktionsleistung (F1) aus der gegebenen Hard- und/oder Software der technischen Komponente ergibt;
   - jede technische Komponente (KOMP) einem Komponententyp zugeordnet wird, wobei Komponenten (KOMP) desselben oder vergleichbaren Funktionsumfangs einem Komponententyp zugewiesen werden;
   - für jeden Komponententyp eine weitere Funktionsleistung (F2) ermittelt wird, welche den Funktionsumfang der Hard- und/oder Software einer Komponente beschreibt, der von allen verfügbaren Komponenten eines Komponententyps die höchste Funktionsleistung aufweist;
   - aus der tatsächlichen Funktionsleistung einer jeweiligen technischen Komponente (KOMP) und der weiteren Funktionsleistung eine Komponenten-bezogene, normierte Funktionsleistung (nF) ermittelt wird;
   - aus den Komponenten-bezogenen, normierten Funktionsleistungen (nF) aller Komponenten (KOMP) desselben Komponententyps eine Komponententyp-bezogene, normierte Funktionsleistung (nFS) ermittelt wird;
   - die Komponententyp-bezogene, normierte Funktionsleistung zumindest eines Komponententyps (nFS) mit einem Schwellwert (SW) verglichen wird, wobei bei einer Unterschreitung des Schwellwerts (SW) ein Alarmsignal ausgegeben wird.

2. Verfahren nach Anspruch 1, **dadurch gekennzeichnet, dass** zur Ermittlung der Komponententyp-bezogenen, normierten Funktionsleistung (nFS) eine Gewichtung nach baugleichen Komponenten relativ zur Gesamtanzahl aller Komponenten (KOMP) desselben Komponententyps vorgenommen wird.

**3.** Verfahren nach Anspruch 1 oder 2, **dadurch gekennzeichnet, dass** die weitere Funktionsleistung (F2) eines jeweiligen Komponententyps in vorgegebenen Zeitintervallen neu bestimmt wird, um basierend darauf den Schwellwertvergleich erneut durchzuführen.

**4.** Verfahren nach einem der vorhergehenden Ansprüche, **dadurch gekennzeichnet, dass** aus den Komponententyp-bezogenen Funktionsleistungen eine System-bezogene Funktionsleistung ermittelt wird.

**5.** Verfahren nach einem der vorhergehenden Ansprüche, **dadurch gekennzeichnet, dass** die tatsächliche Funktionsleistung (F1) und die weitere Funktionsleistung (F2) Kennzahlen sind.

**6.** Verfahren nach einem der vorhergehenden Ansprüche, **dadurch gekennzeichnet, dass** die weitere Funktionsleistung (F2) auf eine Zeit bezogen wird, zu der die weitere Funktionsleistung (F2) einer Komponente (KOMP) des zugeordneten Komponententyps erstmalig zur Verfügung steht.

**7.** Verfahren nach einem der vorhergehenden Ansprüche, **dadurch gekennzeichnet, dass** die tatsächliche Funktionsleistung (F1) durch einen Vergleich mit zumindest einer weiteren, auf eine jeweilige Zeit bezogene Funktionsleistung (F2) des zugeordneten Komponententyps ermittelt wird.

**8.** Verfahren nach einem der vorhergehenden Ansprüche, **dadurch gekennzeichnet, dass** für jeden Komponententyp in einer Datenbank Informationen über den Beginn und das Ende seiner MarktVerfügbarkeit, seiner Funktionsleistung, seiner Funktionsleistung gegenüber einer zeitlich vorherigen Generation, Kompatibilität mit anderen Komponenten desselben oder eines anderen Komponententyps ausgewertet bzw. in dieser hinterlegt werden.

**9.** Verwendung des Verfahrens gemäß einem der vorhergehenden Ansprüche zur Bestimmung der Funktionsleistung in einer Brandmeldeanlage.

**10.** Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf einem Computer läuft.

**Claims**

**1.** Method for the computer-assisted monitoring of the functional performance of a technical system (BMA), which comprises a plurality of technical components (KOMP) in which

- for each technical component (KOMP) of the technical system an actual functional performance (F1) is determined, wherein the actual functional performance (F1) is produced by the given hardware and/or software of the technical components;
- each technical component (KOMP) is assigned a component type, wherein components (KOMP) with the same or a comparable scope of functions are allocated a component type;
- for each component type a further functional performance (F2) is determined, which describes the range of functions of the hardware and/or software of the component, which has the highest functional performance of all available components of a component type;
- from the actual functional performance of a given technical component (KOMP) and the further functional performance a component-related, normalised functional performance (nF) is determined;
- from the component-related, normalised functional performances (nF) of all components (KOMP) of the same component type, a component type-related normalised functional performance (nFS) is determined;
- the component type-related, normalised functional performance of at least one component type (nFS) is compared with a threshold value (SW), wherein, if the performance falls below the threshold value (SW) an alarm signal is output.

**2.** Method according to claim 1, **characterised in that**, for determining the component type-related, normalised functional performance (nFS) a weighting according to components of identical design relative to the total number of all components (KOMP) of the same component type is undertaken.

**3.** Method according to claim 1 or 2, **characterised in that** the further functional performance (F2) of a respective component type is newly defined at predetermined intervals in order to carry out the new threshold value comparison on the basis thereof.

**4.** Method according to one of the preceding claims, **characterised in that** a system-related functional performance is determined from the component type-related functional performances.

**5.** Method according to one of the preceding claims, **characterised in that** the actual functional performance (F1) and the further functional performance (F2) are characteristic values.

**6.** Method according to one of the preceding claims, **characterised in that** the further functional performance (F2) is related to the time at which the further functional performance (F2) of a component (KOMP) of the assigned component type is available for the first time.

**7.** Method according to one of the preceding claims, **characterised in that** the actual functional performance (F1) is determined by a comparison with at least one further functional performance (F2) of the assigned component type related to a respective time.

**8.** Method according to one of the preceding claims, **characterised in that**, for each component type, information in a database about the beginning and the end of its market availability, its functional performance, its functional performance compared to a previous generation in time, compatibility with other components of the same or of a different component type is evaluated or is stored in said database.

**9.** Use of the method according to one of the preceding claims to determine the functional performance in a fire alarm system.

**10.** Computer program product, which can be loaded directly into the internal memory of a digital computer and comprises software code sections with which the steps according to one of the preceding claims are executed when the product runs on a computer.

**Revendications**

**1.** Procédé de surveillance, assistée par ordinateur, de la puissance fonctionnelle d'un système technique (BMA), qui comprend une pluralité de composants techniques (KOMP), dans lequel

- pour chaque composant technique (KOMP) du système technique, une puissance fonctionnelle réelle (F1) est déterminée, la puissance fonctionnelle réelle (F1) résultant du matériel et/ou du logiciel donné des composants techniques ;
- chaque composant technique (KOMP) est associé à un type de composant, des composants (KOMP) du même périmètre fonctionnel ou d'un périmètre fonctionnel comparable étant affectés à un type de composant ;
- pour chaque type de composant, une autre puissance fonctionnelle (F2) est déterminée, qui décrit le périmètre fonctionnel du matériel et/ou du logiciel d'un composant présentant la puissance fonctionnelle la plus élevée parmi tous les composants disponibles d'un type de composant ;
- une puissance fonctionnelle normalisée (nF), relative au composant, est déterminée à partir de la puissance fonctionnelle réelle d'un composant technique (KOMP) respectif et de l'autre puissance fonctionnelle ;
- une puissance fonctionnelle normalisée (nFS), relative au type de composant, est déterminée à partir des puissances fonctionnelles normalisées (nF), relatives aux composants, de tous les composants (KOMP) du même type de composant ;
- la puissance fonctionnelle normalisée (nFS), relative au type de composant, d'au moins un type de composant est comparée à une valeur de seuil (SW), un signal d'alarme étant émis en cas de dépassement inférieur de la valeur de seuil (SW).

**2.** Procédé selon la revendication 1, **caractérisé en ce que**, pour déterminer la puissance fonctionnelle normalisée (nFS), relative au type de composant, une pondération est effectuée des composants de structure identique par rapport au nombre total de tous les composants (KOMP) du même type de composant.

**3.** Procédé selon la revendication 1 ou 2, **caractérisé en ce que** l'autre puissance fonctionnelle (F2) d'un type de composant respectif spécifié est à nouveau déterminée à l'intérieur d'intervalles de temps, afin de mettre à nouveau en oeuvre la comparaison de valeur de seuil en se basant sur celle-ci.

**4.** Procédé selon l'une quelconque des revendications précédentes, **caractérisé en ce qu'**une puissance fonctionnelle relative au système est déterminée à partir des puissances fonctionnelles relatives au type de composant.

**5.** Procédé selon l'une quelconque des revendications précédentes, **caractérisé en ce que** la puissance fonctionnelle réelle (F1) et l'autre puissance fonctionnelle (F2) sont des indices.

**6.** Procédé selon l'une quelconque des revendications précédentes, **caractérisé en ce que** l'autre puissance fonctionnelle (F2) se rapporte à un moment auquel l'autre puissance fonctionnelle (F2) d'un composant (KOMP) du type de composant associé est à disposition pour la première fois.

**7.** Procédé selon l'une quelconque des revendications précédentes, **caractérisé en ce que** la puissance fonctionnelle réelle (F1) est déterminée grâce à une comparaison avec au moins une autre puissance fonctionnelle (F2), relative à un moment respectif, du type de composant associé.

**8.** Procédé selon l'une quelconque des revendications précédentes, **caractérisé en ce que**, pour chaque type de composant d'une banque de données, des informations sur le début et la fin de sa disponibilité sur le marché, sa puissance fonctionnelle, sa puissance fonctionnelle par rapport à une génération précédente, la compatibilité avec d'autres composants du même type de composant ou d'un autre type de composant sont évaluées ou bien consignées dans ladite banque de données.

**9.** Utilisation du procédé selon l'une quelconque des revendications précédentes pour déterminer la puissance fonctionnelle dans une installation de détection d'incendie.

**10.** Produit-programme informatique, qui peut être chargé directement dans le disque dur interne d'un ordinateur digital et qui comprend des sections de code de logiciel grâce auxquelles les étapes selon l'une quelconque des revendications précédentes sont mises en oeuvre, lorsque le produit est en cours de fonctionnement sur un ordinateur.

FIG 1

BMZ

FIG 2

FIG 3

FIG 4

| KOMP | DAT | LEISTPL | PR | LD | |
|------|-----|---------|-----|-----|---|
| ... | ... | ... | ... | ... | |